# EUROPÄISCHE PATENTSCHRIFT

(11) **EP 3 874 334 B1**
(45) Veröffentlichungstag und Bekanntmachung des Hinweises auf die Patenterteilung: **08.04.2026**
(21) Anmeldenummer: 19786809.4
(22) Anmeldetag: 18.10.2019
(51) Int. Cl.: G05B 19/05, G05B 19/042

(54) **VORRICHTUNG UND VERFAHREN ZUR ITERATIVEN UND INTERAKTIVEN PROJEKTIERUNG VON EINER I/O-STATION FÜR EINE AUTOMATISIERUNGSTECHNISCHE STEUERUNG**
APPARATUS AND METHOD FOR ITERATIVELY AND INTERACTIVELY PLANNING AN I/O STATION FOR AN AUTOMATION CONTROLLER
DISPOSITIF ET PROCÉDÉ DE CONCEPTION DE PROJETS ITÉRATIFS ET INTERACTIFS D'UNE STATION D'E/S POUR UNE COMMANDE D'AUTOMATISATION

(30) Priorität: 31.10.2018 BE 201805767
(43) Veröffentlichungstag der Anmeldung: 08.09.2021
(73) Patentinhaber: Phoenix Contact GmbH & Co. KG, 32825 Blomberg (DE)
(72) Erfinder: ARON, Ralf, 32760 Detmold (DE); KONIECZNY, Frank, 32657 Lemgo (DE); KRUMSIEK, Dietmar, 31860 Emmerthal (DE); WERNER, Burkhard, 33758 Schloß Holte-Stukenbrock (DE)
(74) Vertreter: Maiwald GmbH
(86) Internationale Anmeldenummer: PCT/EP2019/078333
(87) Internationale Veröffentlichungsnummer: WO 2020/088950

(56) Entgegenhaltungen:
- US-A- 5 056 001
- US-A1- 2008 114 902
- US-A1- 2012 290 759
- US-A1- 2017 364 045

## Beschreibung

### Technisches Gebiet

Die vorliegende Erfindung betrifft Systeme für einen Aufbau einer I/O-Station.

Insbesondere betrifft die vorliegende Erfindung eine Vorrichtung und ein Verfahren zur iterativen und interaktiven Projektierung von einer I/O-Station für eine automatisierungstechnische Steuerung.

### Technischer Hintergrund

Bekannte Software-Systeme für den Aufbau modularer I/O-Systeme, wie das TIA Selection Tool oder der Buskonfigurator im PLCnext Engineer, beschränken sich auf die Einhaltung von Regeln und Abhängigkeiten, um einen vollständigen, in Bezug auf die für den Aufbau der Station benötigten Komponenten fehlerfreien Aufbau der I/O-Station zu prüfen.

Die Auswahl der für den Aufbau der I/O-Station einzusetzenden Komponenten erfolgt in diesen Software-Werkzeugen aber immer durch den Anwender der Software, z.B. durch die Auswahl der einzusetzenden Komponente aus einem entsprechend dargestellten Produktkatalog, bevorzugt in einer Tree-orientierten Ansicht.

Zur Erleichterung von Masseneingaben können an dieser Stelle gegebenenfalls die Anzahl der einzufügenden Komponenten oder die Anzahl der benötigten Kanäle zum Anschluss der Peripherie angegeben werden.

US 2017/0364045 A1 beschreibt ein Verfahren zum Konfigurieren eines programmierbaren IO Controllers und eine Suche nach verbindbaren IO Modulen.

### Zusammenfassung der Erfindung

Es ist eine Aufgabe der vorliegenden Erfindung, eine verbesserte Vorrichtung ein verbessertes Verfahren zur Projektierung von einer I/O-Station für eine automatisierungstechnische Steuerung bereitzustellen.

Diese Aufgabe wird durch die Gegenstände der unabhängigen Patentansprüche gelöst. Weiterbildungen und Ausführungsformen sind den abhängigen Patentansprüchen, der Beschreibung und den Figuren der Zeichnungen zu entnehmen.

Ein erster Aspekt der vorliegenden Erfindung betrifft eine Vorrichtung zur iterativen und interaktiven Projektierung von einer I/O-Station für eine automatisierungstechnische Steuerung, wobei die Vorrichtung eine Auswahleinrichtung, eine Datenbankeinrichtung, eine Konfigurationseinrichtung und eine Anzeigeneinrichtung umfasst.

Die Auswahleinrichtung ist dazu ausgebildet, eine Auswahl von Signalen für die I/O-Station in der Form von Signaldaten und Planungsdaten für die I/O-Station basierend auf einer Nutzereingabe festzulegen.

Die Datenbankeinrichtung ist dazu ausgebildet, Eigenschaftsdaten für eine Vielzahl von I/O-Geräten bereitzustellen.

Die Konfigurierungseinrichtung ist dazu ausgebildet, basierend auf den Signaldaten, den Planungsdaten und den Eigenschaftsdaten eine Systemkonfiguration für die I/O-Station zu bestimmen, welche mindestens ein I/O-Gerät aus der Vielzahl der I/O-Geräte umfasst, wobei die Konfigurationseinrichtung ferner dazu ausgebildet ist, eine technische Prüfung von spezifischen Aufbauregeln des jeweiligen I/O-Stationen der Systemkonfiguration durchzuführen und im Falle eines Nichtbestehens der technische Prüfung die Systemkonfiguration zu ändern.

Die Anzeigeneinrichtung ist dazu ausgebildet, die Systemkonfiguration für die I/O-Station anzuzeigen.

Die vorliegende Erfindung ermöglicht, dass ein Anwender bei der Projektierung - die Projektierung umfasst beispielsweise Zusammenstellung und Auslegung - einer modular aufgebauten I/O-Station in einer iterativen Vorgehensweise interaktiv und dadurch besonders produktiv unterstützt wird. Dies beinhaltet die Generierung einer möglichen Implementierung des Gesamtsystems der modular aufgebauten I/O-Station aus einer Vielzahl von I/O-Modulen allein durch die Auswahl und Beschreibung der an die I/O-Station anzuschließenden I/O-Signale, ohne dass der Anwender selber Kenntnisse über die I/O-Geräte und deren Eigenschaften haben muss.

Die projektierte I/O-Station wird beispielsweise im Umfeld von industriellen Steuerungen, etwa automatisierungstechnische Steuerungen oder auch speicherprogrammierbare Steuerungen, SPS, eingesetzt, die zur Automatisierung von maschinellen oder prozesstechnischen Abläufen dienen.

Die interaktive Unterstützung des Tools ist dabei derart konzipiert, dass das Tool bereits mit wenigen und einfachen Angaben vom Anwender eine funktionierende Lösung ermittelt und sie direkt, etwa zeitlich unmittelbar nach der Dateneingabe, visualisiert.

Dabei nimmt das Tool beispielsweise für jene Parameter, die der Anwender noch nicht konkretisiert hat, typische Werte an und ergänzt auf diese Weise die Angaben des Benutzers.

In der visualisierten Lösung stellt das Tool alle bisher eingebebenen und gegebenenfalls auch die ergänzten Parameter der I/O-Station dar und veranlasst den Anwender dadurch, seine Angaben weiter zu konkretisieren, indem er die Werte der ergänzten Parameter entsprechend seinen Anforderungen ändert und anpasst.

Jede zusätzliche Angabe vom Anwender quittiert das Tool beispielsweise direkt mit der Überarbeitung und/oder einer Neuermittlung der I/O-Station und unterstützt den Anwender damit die I/O-Station in iterativer und interaktiver Weise spezifischer an seine Anwendung oder die jeweilige Applikation anzupassen.

Mit anderen Worten ausgedrückt, die vorliegende Erfindung ermöglicht es, den Anwender iterativ und interaktiv zu einer besser an die Applikation angepasste I/O-Station zu führen - die angepasste I/O-Station stellt die kundenindividuelle Lösung für seinen spezifischen Anlagenwunsch dar.

Die vorliegende Erfindung ermöglicht vorteilhaft, dass eine direkte Bearbeitung und erneuerte Darstellung des abgeänderten Stationsaufbaus auf eine Eingabe des Anwenders erfolgt.

Die vorliegende Erfindung umfasst daher die eingabebegleitende strukturelle Prüfungen von Aufbauregeln des I/O-Systems, z.B. Stromberechnungen oder Infrastruktur-Komponenten werden fortlaufend beim Erstellen des Stationsaufbaus überprüft.

Die vorliegende Erfindung umfasst ferner auch die ausgabenunterstützte und Nutzerinteraktion-basierte strukturelle Prüfungen von Aufbauregeln des I/O-Systems.

Die vorliegende Erfindung ermöglicht vorteilhaft, eine direkte Rückmeldung an den Benutzer zu den projektierten I/O-Signalen während der Dateneingabe und/oder der Datenausgabe zu erreichen.

Die vorliegende Erfindung ermöglicht vorteilhaft, das konkrete Anschlussszenario der angeschlossenen Peripherie - Sensoren, Aktoren oder Verarbeitungseinheiten - durch unterschiedliche Typen von I/O-Signalen zu definieren.

Mit anderen Worten ausgedrückt, die vorliegende Erfindung ermöglicht, den konkrete Stationsaufbau bereits bei der initialen Dateneingabe zu generieren und zu vervollständigen, um die Planung der Anlage zu beschleunigen, so dass eine getätigte Geräteauswahl direkt wiederum die Auswahl an I/O-Signalen beeinflusst.

Vorteilhafte Ausgestaltungen der vorliegenden Erfindung sind den Unteransprüchen zu entnehmen.

Die Auswahleinrichtung dazu ausgebildet ist, die Nutzereingabe als eine interaktive Dateneingabe durchzuführen.

Die Konfigurationseinrichtung dazu ausgebildet ist, während der Nutzereingabe wiederholt - etwa per Programmierschleife oder getriggert durch Nutzereingabe oder kontinuierlich - eine funktionierende Lösung für die I/O-Station zu ermitteln. Dies ermöglicht vorteilhaft einen iterativen Interaktionsprozess mit dem Nutzer bereitzustellen.

In einer vorteilhaften Ausführungsform der vorliegenden Erfindung ist vorgesehen, dass die Auswahleinrichtung ferner dazu ausgebildet ist, durch die Dateneingabe nicht spezifizierte Parameter durch ergänzte Parameter - auch als Default-Parameter bezeichnet - zu vervollständigen. Diese ergänzten Parameter sind Default-Werte mit für die jeweilige Anwendung üblichen Werten. Dies ermöglicht zu jeder Interaktion des Nutzers unmittelbar eine funktionsfähige Lösungsfindung.

In einer vorteilhaften Ausführungsform der vorliegenden Erfindung ist vorgesehen, dass die Anzeigeneinrichtung ferner dazu ausgebildet ist, die zur Auswahl des Anwenders ergänzten Default-Parameter anzuzeigen.

In einer vorteilhaften Ausführungsform der vorliegenden Erfindung ist vorgesehen, dass die Nutzereingabe in der Form der interaktiven Dateneingabe eine Vielzahl von einzelnen Datenänderungen unterstützt.

In einer vorteilhaften Ausführungsform der vorliegenden Erfindung ist vorgesehen, dass die Konfigurationseinrichtung dazu ausgebildet ist, nach jeder einzelnen Datenänderung eine Überarbeitung der Systemkonfiguration für die I/O-Station durchzuführen.

In einer vorteilhaften Ausführungsform der vorliegenden Erfindung ist vorgesehen, dass die Datenbankeinrichtung ferner dazu ausgebildet ist, Eigenschaftsdaten für eine Vielzahl von Sensorgeräten, Aktorgeräten, Schaltgeräten, Verstärkergeräten, Steuerungsgeräten, Schnittstellengeräten, oder Buskopplungsgeräte bereitzustellen.

In einer vorteilhaften Ausführungsform der vorliegenden Erfindung ist vorgesehen, dass die Konfigurierungseinrichtung ferner dazu ausgebildet ist, die I/O-Station zu bestimmen, welche mindestens ein I/O-Gerät oder ein Schaltgerät oder ein Verstärkergerät oder ein Steuerungsgerät oder ein Schnittstellengerät oder ein Buskoppelungsgerät aus der Vielzahl der I/O-Geräte, Schaltgeräte, Verstärkergeräte, Steuerungsgeräte, Schnittstellengeräte oder Buskopplungsgeräte umfasst.

In einer vorteilhaften Ausführungsform der vorliegenden Erfindung ist vorgesehen, dass die Eigenschaftsdaten eines I/O-Gerätes mindestens zu einem Anschlussszenario eines Signaltyps aus der Vielzahl der I/O-Geräte passen.

In einer vorteilhaften Ausführungsform der vorliegenden Erfindung ist vorgesehen, dass die Signaldaten eines Anschlussszenarios an mindestens einen Signaltyp aus der Vielzahl der angebotenen Signaltypen zu den Eigenschaftsdaten eines I/O-Gerätes passen.

In einer vorteilhaften Ausführungsform der vorliegenden Erfindung ist vorgesehen, dass die Konfigurierungseinrichtung dazu ausgebildet ist, basierend auf einem Vergleich der Eigenschaftsdaten der für eine I/O-Station vom Anwender ausgewählten Anschlussszenarien mit den Eigenschaftsdaten der I/O-Geräte die Systemkonfiguration für die I/O-Station zu bestimmen.

In einer vorteilhaften Ausführungsform der vorliegenden Erfindung ist vorgesehen, dass die Auswahleinrichtung ferner dazu ausgebildet ist, für die bestimmte Systemkonfiguration der I/O-Station Grundeinstellungsdaten und/oder Rahmenbedingungsdaten der I/O-Station festzulegen.

In einer vorteilhaften Ausführungsform der vorliegenden Erfindung ist vorgesehen, dass als die Grundeinstellungsdaten der I/O-Station ein Steuerungstyp, eine Performance-Klasse, ein Programmiersystem durch die Auswahleinrichtung festgelegt werden.

In einer vorteilhaften Ausführungsform der vorliegenden Erfindung ist vorgesehen, dass als Rahmenbedingungsdaten der I/O-Station der Temperaturbereich für den Betrieb der I/O-Station, ein Abmessungsbereich für den Aufbau der I/O-Station, ein Feuchtigkeitsbereich für den Betrieb der I/O-Station, ein Massenbereich für den Aufbau der I/O-Station, ein Spannungsbereich oder ein Strombereich für den Anschluss der I/O-Station, erforderliche Zulassungen für die Auswahl der Geräte durch die Auswahleinrichtung festgelegt werden.

In einem zweiten Aspekt der vorliegenden Erfindung ist ein Verfahren zur iterativen und interaktiven Projektierung von einer I/O-Station für eine automatisierungstechnische Steuerung eines Artikels vorgesehen, wobei das Verfahren die folgenden Verfahrensschritte umfasst:
Als ein erster Schritt des Verfahrens erfolgt ein Festlegen von einer Auswahl von Signalen für die I/O-Station in der Form von (i) Signaldaten und von (ii) Planungsdaten für die I/O-Station basierend auf einer Nutzereingabe mittels einer Auswahleinrichtung.

Als ein zweiter Schritt des Verfahrens erfolgt ein Bereitstellen von Eigenschaftsdaten für eine Vielzahl von I/O-Geräten mittels einer Datenbankeinrichtung. Als ein dritter Schritt des Verfahrens erfolgt ein Bestimmen von einer Systemkonfiguration für die I/O-Station, basierend auf den Signaldaten, den Planungsdaten und den Eigenschaftsdaten mittels einer Konfigurierungseinrichtung, wobei die die Systemkonfiguration mindestens ein I/O-Gerät aus der Vielzahl der I/O-Geräte umfasst, wobei ferner eine technische Prüfung von spezifischen Aufbauregeln des jeweiligen I/O-Stationen der Systemkonfiguration von der Konfigurationseinrichtung durchgeführt wird und im Falle eines Nichtbestehens der technischen Prüfung die Systemkonfiguration geändert wird.

Als ein vierter Schritt des Verfahrens erfolgt ein Anzeigen der Systemkonfiguration für die I/O-Station mittels einer Anzeigeneinrichtung.

Das Verfahren der vorliegenden Erfindung ermöglicht vorteilhaft die interaktiv geführte Simulation von I/O-Stationen im Planungsprozess der automatisierungstechnischen Ausrüstung einer Anlage, Maschine oder prozesstechnischen Einrichtung.

Als die Nutzereingabe eine interaktive Dateneingabe von der Auswahleinrichtung durchgeführt wird, und wobei während der Nutzereingabe eine funktionierende Lösung für die I/O-Station von der Konfigurationseinrichtung ermitteln wird.

In einer vorteilhaften Ausführungsform der vorliegenden Erfindung ist vorgesehen, dass durch die Dateneingabe des Anwenders nicht spezifizierte Parameter ergänzt und von der Auswahleinrichtung mit Default-Werten belegt werden und die Werte aller Parameter von der Anzeigeneinrichtung angezeigt werden.

In einer vorteilhaften Ausführungsform der vorliegenden Erfindung ist vorgesehen, dass die Nutzereingabe in der Form der interaktiven Dateneingabe eine Vielzahl von einzelnen Datenänderungen aufweist und nach jeder einzelnen Datenänderung eine Überarbeitung der Systemkonfiguration für die I/O-Station von der Konfigurationseinrichtung durchgeführt wird.

In einer vorteilhaften Ausführungsform der vorliegenden Erfindung ist vorgesehen, dass die Eigenschaftsdaten für eine Vielzahl von Sensorgeräten, Aktorgeräten, Schaltgeräten, Verstärkergeräten, Steuerungsgeräten, Schnittstellengeräten, oder Buskopplungsgeräten von der Datenbankeinrichtung bereitgestellt werden.

In einem dritten Aspekt der vorliegenden Erfindung ist ein Computerprogramm oder Computerprogrammprodukt vorgesehen, umfassend Befehle, die bei der Ausführung des Programms durch einen Computer diesen veranlassen, die Schritte des Verfahrens zur iterativen und interaktiven Projektierung von einer I/O-Station für eine automatisierungstechnische Steuerung gemäß dem zweiten Aspekt der vorliegenden Erfindung auszuführen.

In einem vierten Aspekt der vorliegenden Erfindung ist ein Computerlesbares (Speicher)medium vorgesehen, umfassend Befehle, die bei der Ausführung durch einen Computer diesen veranlassen, die Schritte des Verfahrens zur iterativen und interaktiven Projektierung von einer I/O-Station für eine automatisierungstechnische Steuerung gemäß dem zweiten Aspekt der vorliegenden Erfindung auszuführen.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1:: eine schematische Darstellung einer Vorrichtung zur iterativen und/oder interaktiven Projektierung von einer I/O-Station für eine automatisierungstechnische Steuerung gemäß einem Ausführungsbeispiel der vorliegenden Erfindung;
- Fig. 2:: eine schematische Darstellung eines Flussdiagramms eines Verfahrens zur iterativen und/oder interaktiven Projektierung von einer I/O-Station für eine automatisierungstechnische Steuerung gemäß einem Ausführungsbeispiel der vorliegenden Erfindung; und
- Fig. 3:: eine schematische Darstellung einer Prozessvisualisierung eines Verfahrens zur iterativen und/oder interaktiven Projektierung von einer I/O-Station für eine automatisierungstechnische Steuerung gemäß einem Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

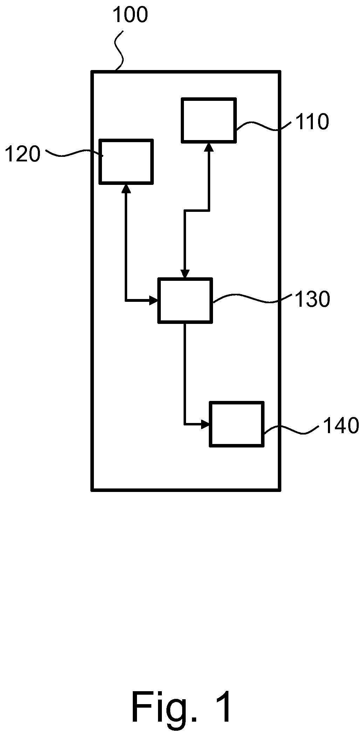

Die Fig. 1 zeigt eine schematische Darstellung einer Vorrichtung zur iterativen und/oder interaktiven Projektierung von einer I/O-Station für eine automatisierungstechnische Steuerung gemäß einem Ausführungsbeispiel der vorliegenden Erfindung.

Die Vorrichtung 100 umfasst eine Auswahleinrichtung 110, eine Datenbankeinrichtung 120, eine Konfigurierungseinrichtung 130, und eine Anzeigeneinrichtung 140.

Die Vorrichtung 100 ist dazu ausgebildet, einen Anwender bei der Projektierung einer modular aufgebauten I/O-Station mit einer iterativen Vorgehensweise interaktiv und dadurch besonders produktiv zu unterstützen.

Die Vorrichtung 100 ist dazu ausgebildet, die Projektierung, d.h. die Zusammenstellung und Auslegung, simultan zur Dateneingabe in kontinuierlicher Weise neu zu ermitteln und darzustellen. Dies erfolgt durch eine ständige Aktualisierung des errechneten und dargestellten modularen Aufbaus der I/O-Station, die jeweilige Systemkonfiguration kann auch als Lösung der vom Nutzer geforderten Systemanforderungen bezeichnet werden.

Gemäß einem Ausführungsbeispiel der vorliegenden Erfindung ist beispielsweise vorgesehen, dass die I/O-Station im Umfeld von industriellen Steuerungen automatisierungstechnische Steuerung, abgekürzt SPS, englisch: Programmable Logic Controller, PLC, eingesetzt wird, die zur Automatisierung von maschinellen oder prozesstechnischen Abläufen dienen.

Die interaktive Unterstützung der Vorrichtung 100 ist gemäß einem Ausführungsbeispiel der vorliegenden Erfindung derart konzipiert, dass die Benutzerschnittstelle bereits bei minimalen Angaben vom Anwender eine funktionierende Lösung ermittelt und sie direkt, zeitlich, d.h. unmittelbar nach der Angabe, auf einer grafischen Benutzeroberfläche oder grafischen Benutzerschnittstelle visualisiert.

Dabei ist die Vorrichtung 100 ferner gemäß einem Ausführungsbeispiel der vorliegenden Erfindung dazu ausgebildet, für weitere Parameter, die der Anwender noch nicht konkretisiert hat, typische Parameterwerte des Aufbaus der I/O-Station anzunehmen. Dabei können die angenommenen Parameterwerte an bereits eingegebenen andere Parameter angepasst sein.

Die Vorrichtung 100 umfasst eine Anzeigeneinrichtung 140, welche dazu ausgebildet ist, die Parameter darzustellen und den Anwender gegebenenfalls durch Hinweise aufzufordern weitere Parameter anzugeben und durch eine in Reaktion auf den Hinweis erfolgte weitere Nutzereingabe zu konkretisieren.

Gemäß einem Ausführungsbeispiel der vorliegenden Erfindung ist die Vorrichtung 100 dazu ausgebildet, jede zusätzliche Angabe vom Anwender direkt mit der Überarbeitung oder einer Neuermittlung der I/O-Station in Form einer aktualisierten Lösung zu beantworten. Dies unterstützt den Anwender, die I/O-Station immer spezifischer an seine Anwendung oder an seine jeweilige Applikation anzupassen.

Dabei ist die Vorrichtung 100 ferner beispielsweise dazu ausgebildet, den Anwender iterativ zu einer Schritt für Schritt besser an die Applikation angepasste I/O-Station oder Lösung zu führen.

Die Auswahleinrichtung 110 ist dazu ausgebildet, eine Auswahl von Signalen für die I/O-Station in der Form von (i) Signaldaten und (ii) Planungsdaten für die I/O-Station basierend auf einer Nutzereingabe festzulegen.

Die Datenbankeinrichtung 120 ist dazu ausgebildet, Eigenschaftsdaten für eine Vielzahl von I/O-Geräten und I/O-Systemen bereitzustellen.

Die Konfigurierungseinrichtung 130 ist dazu ausgebildet, basierend auf den Signaldaten, den Planungsdaten und den Eigenschaftsdaten eine Systemkonfiguration für die I/O-Station zu bestimmen, welche mindestens ein I/O-Gerät aus der Vielzahl der I/O-Geräte umfasst.

Die Konfigurationseinrichtung 130 ist dazu ausgebildet, eine technische Prüfung der spezifischen Aufbauregeln des jeweiligen I/O-Systems der Systemkonfiguration durchzuführen und im Falle eines Nichtbestehens der technischen Prüfung die Systemkonfiguration zu ändern.

Die technische Prüfung der spezifischen Aufbauregeln des jeweiligen I/O-Systems umfasst beispielsweise, dass wenn eine technisch korrekte Umsetzung der eingegebenen Planungs- und Eigenschaftsdaten nicht möglich ist, die Werte der Planungs- und Eigenschaftsdaten zurückgesetzt werden.

Die Anzeigeneinrichtung 140 ist dazu ausgebildet, die Systemkonfiguration für die I/O-Station anzuzeigen.

Die Vorrichtung 100 ermöglicht, die Produktauswahl als Funktionalität bereitzustellen, dies ermöglicht es für jeden Anwender auch ohne besondere Vorkenntnisse das jeweilige Produktportfolio einzusetzen, um eine entsprechend den jeweiligen systemischen Projektierungsregeln funktionsfähige Systemkonfigurationen aufzubauen.

Die Vorrichtung 100 ermöglicht, die Auswahl über Typen von I/O-Signalen und die eigene manuelle Auswahl von Geräten integriert nutzen zu können.

Die Vorrichtung 100 ermöglicht, dass die bei der Erstellung einer I/O-Station für einen Benutzer relevanten Eingaben und Anzeigen, auch wenn diese in separaten Bearbeitungsschritten erfolgen, in einem User-Interface integriert sind.

Die Vorrichtung 100 ermöglicht, über ein integriertes User-Interface, dass jede Reaktion des Systems auf eine Interaktion des Benutzers unmittelbar für den Anwender sichtbar ist.

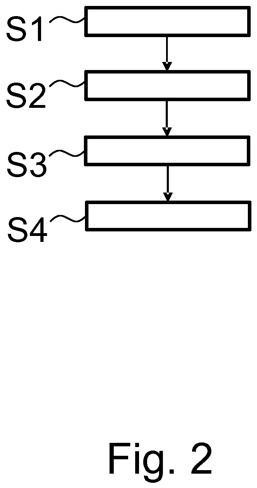

Die Fig. 2 eine schematische Darstellung eines Flussdiagramms eines Verfahrens zur iterativen und/oder interaktiven Projektierung von einer I/O-Station für eine automatisierungstechnische Steuerung gemäß einem Ausführungsbeispiel der vorliegenden Erfindung.

Als ein erster Verfahrensschritt erfolgt ein Festlegen S1 von einer Auswahl von Signalen für die I/O-Station in der Form von (i) Signaldaten und von (ii) Planungsdaten für die I/O-Station basierend auf einer Nutzereingabe mittels einer Auswahleinrichtung.

Als ein zweiter Verfahrensschritt erfolgt ein Bereitstellen S2 von Eigenschaftsdaten für eine Vielzahl von I/O-Geräten und I/O-Systemen mittels einer Datenbankeinrichtung.

Als ein dritter Verfahrensschritt erfolgt ein Bestimmen S3 von einer Systemkonfiguration für die I/O-Station, basierend auf den Signaldaten, den Planungsdaten und den Eigenschaftsdaten mittels einer Konfigurierungseinrichtung, wobei die Systemkonfiguration mindestens ein I/O-Gerät aus der Vielzahl der I/O-Geräte umfasst, wobei ferner eine technische Prüfung der spezifischen Aufbauregeln des jeweiligen I/O-Systems der Systemkonfiguration von der Konfigurationseinrichtung durchgeführt wird und im Falle eines Nichtbestehens der technischen Prüfung die Systemkonfiguration geändert wird.

Als ein vierter Verfahrensschritt erfolgt ein Anzeigen S4 der Systemkonfiguration für die I/O-Station mittels einer Anzeigeneinrichtung.

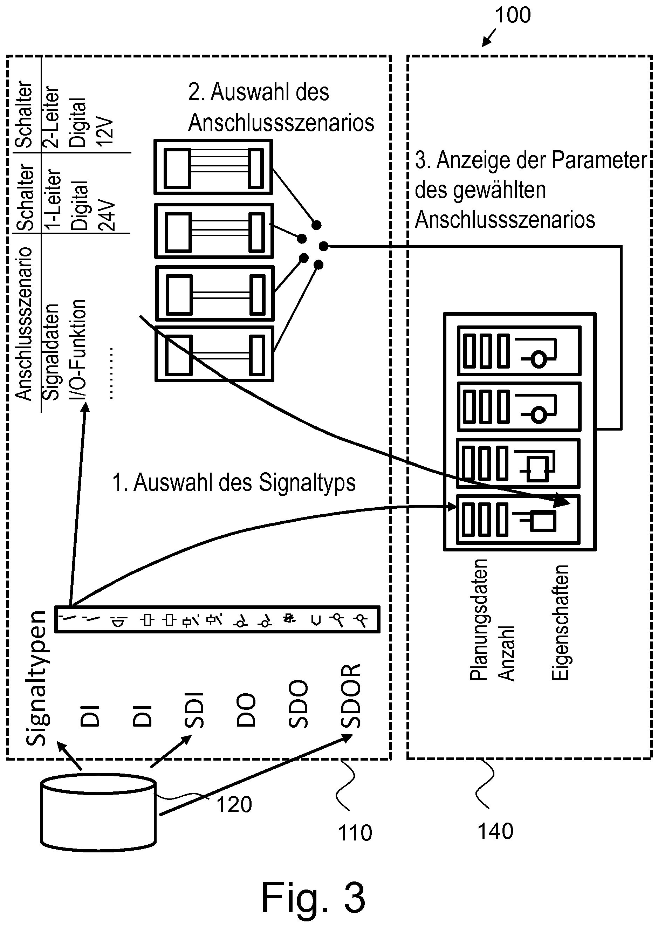

Die Fig. 3 zeigt die interagierenden Abläufe zwischen der Auswahleinrichtung 110, der Datenbankeinrichtung 120 und der Anzeigeneinrichtung 140, wobei auch die Konfigurierungseinrichtung zur Änderung der Systemkonfiguration beiträgt.

Das Verfahren zur iterativen und/oder interaktiven Projektierung von einer I/O-Station für eine automatisierungstechnische Steuerung ist ein Software-Werkzeug, dessen Kernfunktion die Unterstützung bei der Projektierung von I/O-Stationen als Teil der Automatisierung einer Anlage, Maschine oder Liegenschaft ist.

Anwender des Tools sind daher Personen mit fundierten Kenntnissen der Automatisierungstechnik auf der einen und den zu automatisierenden Funktionen oder des zu automatisierenden Prozesses auf der anderen Seite. Die Anwender haben aber überwiegend nur ein begrenztes Wissen über die Automatisierungskomponenten, insbesondere deren spezifische Ausprägung, einzelner Funktionen und deren systemischen Projektierungsregeln für den Aufbau einer konkreten I/O-Station aus seinen einzelnen Komponenten.

Die eigentliche Aufgabe einer I/O-Station ist der Anschluss der Sensoren und Aktoren einer Anlage, Maschine oder Liegenschaft an das jeweilige Automatisierungssystem. Ausgangspunkt bei der Projektierung einer I/O-Station mit dem Verfahren sind daher die Signale von den zu erfassenden Sensoren und zu den anzusteuernden Aktoren, die über eine I/O-Station angeschlossen werden sollen.

In einem Ausführungsbeispiel der vorliegenden Erfindung kann hier noch angeben werden, über welches Netzwerk oder Feldbussystem die Station angebunden wird oder ob die Station selber als Steuerung ausgeführt werden soll.

Die Definition eines Signaltyps erfolgt über einen Satz von Attributen, ein Beispiel ist das Signal "binäres Eingangssignal - 24 V DC, + schaltend".

Auf Basis dieser Planungsinformationen ermittelt das Verfahren selbstständig die Produkte, die funktional und preislich optimal zu der so beschriebenen Aufgabenstellung passen und erstellt dann mit diesen Komponenten einen technisch korrekten Stationsaufbau.

Der so entstandene Stationsaufbau ist damit eine Abbildung oder Übersetzung der beschriebenen Aufgabenstellungen aus der zu projektierenden Kundenapplikation das Verfahren visualisiert dies dem Anwender, indem die projektierten Signale der Sensoren und Aktoren so wie die sich hieraus ergebende Auswahl an Komponenten und in einem entsprechend den Projektierungsregeln stellten Stationsaufbau gegenübergestellt werden.

Wenn der Anwender aufgrund seiner Kenntnisse selber Geräte auswählt und in den Stationsaufbau einfügt, um so eine erzeugte Station nachzuarbeiten, zu ergänzen oder auch vollständig individuell aufzubauen, so erzeugt das Verfahren entsprechende Signale auf der Seite der anzuschließenden Sensorik/Aktorik, die wiederum die Projektierungsinformationen zu diesen manuell ausgewählten Geräten abbilden.

Gemäß einem Ausführungsbeispiel der vorliegenden Erfindung dient das Signal als zentrales Bezugsobjekt für die Berechnung des Stationsaufbaus. Beispiel ist hierfür ein Temperatursensor der über den Signaltyp "analoger Eingang" an ein Automatisierungssystem angebunden wird - diese Beziehung zwischen dem Temperatursensor auf der einen Seite und dem analogen Eingang auf der anderen wird als Anschlussszenario bezeichnet.

Das Anschlussszenario beschreibt den Kontext der konkreten Aufgabenstellung, z.B. dass Messen der Temperatur einer Flüssigkeit in einem Tank. Die Attribute eines Signaltyps definieren einen Satz charakteristischer Eigenschaften zur Identifikation eines Anschlussszenarios.

Das Anschlussszenario ist daher sehr spezifisch und kann nur mit Kenntnis der jeweiligen Applikation sinnvoll benannt werden. Hierzu kann der Bezeichner des Signals genutzt, d.h. spezifisch überschrieben werden.

### Beispielelement für die Attribute eines Signaltyps:

### Attribute

| | |
|---|---|
| I/O-Function | read-only |
| ConnectionTechnology | read-only |
| Logic | read-only |
| Signal | read-only |
| InputCharacteristic | - |
| SurgeResistant | read-only |
| SensorCurrent | - |

Die read-only-Eigenschaften werden benutzt, um ein konkretes Anschlussszenario über seine charakteristische Werte zu ermitteln. Der in der Fig. 3 dargestellte Anzeigenbereich visualisiert dem Benutzer den ermittelten Aufbau des Anschlussszenario in schematischer Darstellung.

Zu jedem gewählten Anschlussszenario wird ein charakteristisches Sensor/Aktor-Symbol zur Visualisierung für den Anwender im Anzeigenbereich dargestellt. Ein Anschlussszenario beschreibt den gesamten Weg vom Sensor/Aktor in der Maschine, Anlage oder Liegenschaft zu den Anschlüssen, Klemmpunkten, des I/O-Moduls mit der dahinter liegenden I/O-Funktion. Dieser Zusammenhang wird durch das Sensor/Aktor-Symbol dargestellt.

Das Verfahren bietet dem Anwender jeweils alle verfügbaren Anschlussszenarien zur Projektierung von Signalen an. Alle angezeigten Anschlussszenarien sind technisch möglich.

Ein Anschlussszenario definiert eine konkrete Realisierung eines Signals. Die möglichen Anschlussszenarien eines Signals sind die Varianten, die der Anwender bei der Projektierung einer I/O-Station nutzen kann.

Das Anschlussszenario - beschreibt konkret, wie das Signal eines Sensors oder Aktors aus der Perspektive der Elektrokonstruktion mit einem Gerät in der I/O-Station verbunden wird.

Das Verfahren bietet dem Anwender beispielsweise verschiedene Optionen, auch Varianten, an, wie der Anschuss eines Signals realisiert werden kann.

Die Kernfunktion ist das Projektieren einer I/O-Station. Diese erfolgt durch die Festlegung der Signale, die an dieser Stelle einer Maschine, Anlage oder Liegenschaft zum Anschluss der Sensoren und Aktoren an die I/O-Station benötigt werden.

Nach der Auswahl zum Anlegen eines neuen Projektes auf dem Start-Bildschirm wechselt das Verfahren beispielsweise direkt in die Stationsansicht, die Stationsansicht ist der Arbeitsplatz zum Planen und Bearbeiten einer I/O-Station, d.h. es wird ein Ein- und Ausgabeinterface für Grundeinstellungsdaten und der Rahmenbedingungsdaten der I/O-Station bereitgestellt. Ein gesamtes Projekt kann mehrere Stationen beinhalten.

Gemäß einem Ausführungsbeispiel der vorliegenden Erfindung ist vorgesehen, dass eine werkzeuggeführten Planung einer I/O-Station durchgeführt wird. Die Definition der für die Projektierung nutzbaren Anschlussszenarien ist in einer alle I/O- Stationen umfassenden, gemeinsamen Datenbank der Datenbankeinrichtung. Diese Datenbank enthält eine Vielzahl von Anschlussszenarien als Vorlagen mit denen der Anwender die an eine I/O-Station anzuschließenden Signale beschreiben kann.

Es werden dem Anwender dabei nur Anschlussszenarien als Vorlage angeboten, zu denen bei den aktuellen Einstellungen für diese Station, auch Geräte verfügbar sind. Jedes Anschlussszenario steht dabei mit seinen Attributen für sich alleine, es gibt also keine Hierarchie oder andere Form von Abhängigkeiten der Anschlussszenarien untereinander.

Ergänzend sei darauf hingewiesen, dass "umfassend" und "aufweisend" keine anderen Elemente oder Schritte ausschließt und "eine" oder "ein" keine Vielzahl ausschließt.

## Patentansprüche

1. Vorrichtung (100) zur iterativen und interaktiven Projektierung von einer I/O-Station für eine automatisierungstechnische Steuerung, wobei die Vorrichtung (100) umfasst:
- eine Auswahleinrichtung (110), welche dazu ausgebildet ist, eine Auswahl von Signalen für die I/O-Station in der Form von (i) Signaldaten und (ii) Planungsdaten für die I/O-Station basierend auf einer Nutzereingabe festzulegen;
- eine Datenbankeinrichtung (120), welche dazu ausgebildet ist, Eigenschaftsdaten für eine Vielzahl von I/O-Geräten bereitzustellen;
- eine Konfigurierungseinrichtung (130), welche dazu ausgebildet ist, basierend auf den Signaldaten, den Planungsdaten und den Eigenschaftsdaten eine Systemkonfiguration für die I/O-Station zu bestimmen, welche mindestens ein I/O-Gerät aus der Vielzahl der I/O-Geräte umfasst, wobei die Konfigurationseinrichtung (130) ferner dazu ausgebildet ist, eine technische Prüfung von spezifischen Aufbauregeln der jeweiligen I/O-Stationen der Systemkonfiguration durchzuführen und im Falle eines Nichtbestehens der technischen Prüfung die Systemkonfiguration zu ändern; und
- eine Anzeigeneinrichtung (140), welche dazu ausgebildet ist, die Systemkonfiguration für die I/O-Station anzuzeigen;
wobei die Auswahleinrichtung (110) dazu ausgebildet ist, als die Nutzereingabe eine interaktive Dateneingabe durchzuführen und wobei die Konfigurationseinrichtung (130) dazu ausgebildet ist, während der Nutzereingabe eine funktionierende Lösung für die I/O-Station zu ermitteln;
wobei die Eigenschaftsdaten ferner mindestens eine I/O Funktion von einem I/O-Gerät aus der Vielzahl der I/O-Geräte umfassen; und wobei die Signaldaten ferner mindestens eine I/O Funktion der Signale umfassen.

2. Vorrichtung (100) nach Anspruch 1,
wobei die Auswahleinrichtung (110) ferner dazu ausgebildet ist, durch die Dateneingabe nicht spezifizierte Parameter durch Default-Parameter zu ergänzen und wobei die Anzeigeneinrichtung (140) ferner dazu ausgebildet ist, die Werte aller Parameter anzuzeigen.

3. Vorrichtung (100) nach einem der vorhergehenden Ansprüche, wobei die Nutzereingabe in der Form der interaktiven Dateneingabe eine Vielzahl von einzelnen Datenänderungen aufweist und wobei die Konfigurationseinrichtung (130) dazu ausgebildet ist, nach jeder einzelnen Datenänderung eine Überarbeitung der Systemkonfiguration für die I/O-Station durchzuführen.

4. Vorrichtung (100) nach einem der vorhergehenden Ansprüche, wobei die Datenbankeinrichtung (120) ferner dazu ausgebildet ist, Eigenschaftsdaten für eine Vielzahl von Sensorgeräten, Aktorgeräten, Schaltgeräten, Verstärkergeräten, Steuerungsgeräten, Schnittstellengeräten, oder Buskopplungsgerät bereitzustellen.

5. Vorrichtung (100) nach Anspruch 4,
wobei die Konfigurierungseinrichtung (130) ferner dazu ausgebildet ist, die I/O-Station zu bestimmen, welche mindestens ein I/O-Gerät oder ein Schaltgerät oder ein Verstärkergerät oder ein Steuerungsgerät oder ein Schnittstellengerät oder ein Buskoppelungsgerät aus der Vielzahl der I/O-Geräte, Schaltgeräte, Verstärkergeräte, Steuerungsgeräte, Schnittstellengeräte oder Buskopplungsgeräte umfasst.

6. Vorrichtung (100) nach Anspruch 5,
wobei die Konfigurierungseinrichtung (130) dazu ausgebildet ist, basierend auf einem Vergleich der Eigenschaftsdaten von für eine I/O-Station vom Anwender ausgewählten Anschlussszenarien mit den Eigenschaftsdaten der I/O-Geräte die Systemkonfiguration für die I/O-Station zu bestimmen.

7. Vorrichtung (100) nach einem der vorhergehenden Ansprüche, wobei die Auswahleinrichtung (110) ferner dazu ausgebildet ist, für die bestimmte Systemkonfiguration der I/O-Station Grundeinstellungsdaten der I/O-Station festzulegen.

8. Vorrichtung (100) nach Anspruch 7,
wobei als Grundeinstellungsdaten der I/O-Station ein Steuerungstyp, eine Performance-Klasse, ein Programmiersystem durch die Auswahleinrichtung (110) festgelegt werden;.

9. Vorrichtung (100) nach einem der vorhergehenden Ansprüche, wobei die Auswahleinrichtung (110) ferner dazu ausgebildet ist, für die bestimmte Systemkonfiguration der I/O-Station Rahmenbedingungsdaten der I/O-Station festzulegen.

10. Vorrichtung (100) nach Anspruch 9,
wobei als Rahmenbedingungsdaten der I/O-Station ein Temperaturbereich für den Betrieb der I/O-Station, ein Abmessungsbereich für den Aufbau der I/O-Station, ein Feuchtigkeitsbereich für den Betrieb der I/O-Station, ein Massenbereich für den Aufbau der I/O-Station, ein Spannungsbereich oder ein Strombereich für den Anschluss der I/O-Station, erforderliche Zulassungen für die Auswahl der Geräte durch die Auswahleinrichtung (110) festgelegt werden.

11. Verfahren zur iterativen und interaktiven Projektierung von einer I/O-Station für eine automatisierungstechnische Steuerung, wobei das Verfahren die folgenden Verfahrensschritte umfasst:
- Festlegen (Sl) von einer Auswahl von Signalen für die I/O-Station in der Form von (i) Signaldaten und von (ii) Planungsdaten für die I/O-Station basierend auf einer Nutzereingabe mittels einer Auswahleinrichtung;
- Bereitstellen (S2) von Eigenschaftsdaten für eine Vielzahl von I/O-Geräten mittels einer Datenbankeinrichtung;
- Bestimmen (S3) von einer Systemkonfiguration für die I/O-Station, basierend auf den Signaldaten, den Planungsdaten und den Eigenschaftsdaten mittels einer Konfigurierungseinrichtung, wobei die die Systemkonfiguration mindestens ein I/O-Gerät aus der Vielzahl der I/O-Geräte umfasst, wobei ferner eine technische Prüfung von spezifischen Aufbauregeln des jeweiligen I/O-Stationen der Systemkonfiguration von der Konfigurationseinrichtung durchgeführt wird und im Falle eines Nichtbestehens der technischen Prüfung die Systemkonfiguration geändert wird; und
- Anzeigen (S4) der Systemkonfiguration für die I/O-Station mittels einer Anzeigeneinrichtung;
wobei die Nutzereingabe in Form einer interaktiven Dateneingabe von der Auswahleinrichtung geführt wird, und wobei während der Nutzereingabe eine funktionierende Lösung für die I/O-Station von der Konfigurationseinrichtung ermittelt wird;
wobei die Eigenschaftsdaten ferner mindestens eine I/O Funktion von einem I/O-Gerät aus der Vielzahl der I/O-Geräte umfassen; und/oder wobei die Signaldaten ferner mindestens eine I/O Funktion der Signale umfassen.

12. Verfahren nach Anspruch 11,
wobei durch die Dateneingabe nicht spezifizierte Parameter von der Auswahleinrichtung ergänzt und mit Default-Werten belegt werden und alle Parameter von der Anzeigeneinrichtung angezeigt werden.

13. Verfahren nach einem der vorhergehenden Ansprüche 11 bis 12,
wobei die Nutzereingabe in der Form der interaktiven Dateneingabe eine Vielzahl von einzelnen Datenänderungen aufweist und nach jeder einzelnen Datenänderung eine Überarbeitung der Systemkonfiguration für die I/O-Station von der Konfigurationseinrichtung durchgeführt wird.

14. Verfahren nach einem der vorhergehenden Ansprüche 11 bis 13,
wobei die Eigenschaftsdaten für eine Vielzahl von Sensorgeräten, Aktorgeräten, Schaltgeräten, Verstärkergeräten, Steuerungsgeräten, Schnittstellengeräten, und Buskopplungsgerät von der Datenbankeinrichtung bereitgestellt werden.

## Claims

1. Device (100) for iterative and interactive project planning of an I/O station for an automation control system, wherein the device (100) comprises:
- a selection device (110) configured to determine a selection of signals for the I/O station in the form of (i) signal data and (ii) planning data for the I/O station based on a user input;
- a database device (120) configured to provide property data for a plurality of I/O devices;
- a configuration device (130) configured to determine a system configuration for the I/O station based on the signal data, the planning data, and the property data, which configuration comprises at least one I/O device from the plurality of I/O devices, wherein the configuration device (130) is further configured to perform a technical check of specific setup rules of the respective I/O stations of the system configuration and, in the event of a failure of the technical check, to change the system configuration; and
- a display device (140) configured to display the system configuration for the I/O station;
wherein the selection device (110) is configured to perform interactive data input as the user input, and wherein the configuration device (130) is configured to determine a functioning solution for the I/O station during the user input;
wherein the property data further comprises at least one I/O function of one I/O device from the plurality of I/O devices; and wherein the signal data further comprises at least one I/O function of the signals.

2. Device (100) according to claim 1,
wherein the selection device (110) is further configured to supplement parameters not specified by the data input with default parameters, and wherein the display device (140) is further configured to display the values of all parameters.

3. Device (100) according to one of the preceding claims, wherein the user input in the form of interactive data input comprises a plurality of individual data changes and wherein the configuration device (130) is configured to perform a revision of the system configuration for the I/O station after each individual data change.

4. Device (100) according to one of the preceding claims, wherein the database device (120) is further configured to provide property data for a plurality of sensor devices, actuator devices, switching devices, amplifier devices, control devices, interface devices, or bus coupling devices.

5. Device (100) according to claim 4,
wherein the configuration device (130) is further configured to determine the I/O station, which comprises at least one I/O device or a switching device or an amplifier device or a control device or an interface device or a bus coupling device from the plurality of I/O devices, switching devices, amplifier devices, control devices, interface devices, or bus coupling devices.

6. Device (100) according to claim 5,
wherein the configuration device (130) is configured to determine the system configuration for the I/O station based on a comparison of the property data of connection scenarios selected by the user for an I/O station with the property data of the I/O devices.

7. Device (100) according to one of the preceding claims, wherein the selection device (110) is further configured to define basic setting data for the I/O station for the determined system configuration of the I/O station.

8. Device (100) according to claim 7,
wherein a control type, a performance class, and a programming system are specified by the selection device (110) as basic setting data for the I/O station.

9. Device (100) according to one of the preceding claims, wherein the selection device (110) is further configured to define boundary condition data for the I/O station for the specific system configuration of the I/O station.

10. Device (100) according to claim 9,
wherein as boundary condition data of the I/O stateion a temperature range for the operation of the I/O station, a dimensional range for the construction of the I/O station, a humidity range for the operation of the I/O station, a mass range for the construction of the I/O station, a voltage range or a current range for connecting the I/O station, and required approvals for the selection of devices by the selection device (110) are specified.

11. Method for the iterative and interactive project planning of an I/O station for an automation control system, wherein the method comprises the following
method steps:
- defining (S1) a selection of signals for the I/O station in the form of (i) signal data and (ii) planning data for the I/O station based on user input by means of a selection device;
- providing (S2) property data for a plurality of I/O devices by means of a database device;
- determining (S3) a system configuration for the I/O station based on the signal data, the planning data, and the property data by means of a configuration device, wherein the system configuration comprises at least one I/O device from the plurality of I/O devices, wherein a further technical check of specific setup rules of the respective I/O stations of the system configuration is performed by the configuration device and, in the event of a failure of the technical check, the system configuration is changed; and
- displaying (S4) the system configuration for the I/O station by means of a display device;
wherein the user input is guided in the form of interactive data input by the selection device, and wherein during the user input a functioning solution for the I/O station is determined by the configuration device;
wherein the property data further comprises at least one I/O function of one I/O device from the plurality of I/O devices; and/or wherein the signal data further comprise at least one I/O function of the signals.

12. Method according to claim 11,
wherein parameters not specified by the data input are supplemented by the selection device and assigned default values, and all parameters are displayed by the display device.

13. Method according to one of the preceding claims 11 to 12, wherein the user input in the form of interactive data input comprises a plurality of individual data changes and, after each individual data change, a revision of the system configuration for the I/O station is performed by the configuration device.

14. Method according to one of the preceding claims 11 to 13, wherein the property data for a plurality of sensor devices, actuator devices, switching devices, amplifier devices, control devices, interface devices, and bus coupling devices are provided by the database device.

## Revendications

1. Dispositif (100) pour la planification itérative et interactive d'une station d'E/S pour une commande d'automatisation, le dispositif (100) comprenant :
- un dispositif de sélection (110) qui est conçu pour définir une sélection de signaux pour la station d'E/S sous la forme (i) de données de signaux et (ii) de données de planification pour la station d'E/S sur la base d'une entrée d'utilisateur ;
- un dispositif de base de données (120) qui est conçu pour fournir des données sur des propriétés pour une pluralité d'appareils d'E/S ;
- un dispositif de configuration (130) qui est conçu pour déterminer, sur la base des données de signaux, des données de planification et des données sur des propriétés, une configuration de système pour la station d'E/S qui comprend au moins un appareil d'E/S parmi la pluralité des appareils d'E/S, dans lequel le dispositif de configuration (130) est en outre conçu pour effectuer un contrôle technique de règles de construction spécifiques des stations d'E/S respectives de la configuration de système et, en cas d'absence du contrôle technique, pour changer la configuration de système ; et
- un dispositif d'affichage (140) qui est conçu pour afficher la configuration de système pour la station d'E/S ;
dans lequel le dispositif de sélection (110) est conçu pour effectuer une entrée de données interactive en tant qu'entrée d'utilisateur et dans lequel le dispositif de configuration (130) est conçu pour déterminer une solution fonctionnelle pour la station d'E/S pendant l'entrée d'utilisateur ;
dans lequel les données sur des propriétés comprennent en outre au moins une fonction d'E/S d'un appareil d'E/S parmi la pluralité d'appareils d'E/S ; et dans lequel les données de signaux comprennent en outre au moins une fonction d'E/S des signaux.

2. Dispositif (100) selon la revendication 1,
dans lequel le dispositif de sélection (110) est en outre conçu pour compléter des paramètres non spécifiés par l'entrée de données par des paramètres par défaut et dans lequel le dispositif d'affichage (140) est en outre conçu pour afficher les valeurs de tous les paramètres.

3. Dispositif (100) selon l'une des revendications précédentes,
dans lequel l'entrée d'utilisateur sous la forme de l'entrée de données interactive comporte une pluralité de modifications de données individuelles et dans lequel le dispositif de configuration (130) est conçu pour effectuer une révision de la configuration de système pour la station d'E/S après chaque modification de données individuelle.

4. Dispositif (100) selon l'une des revendications précédentes,
dans lequel l'équipement de base de données (120) est en outre conçu pour fournir des données sur des propriétés pour une pluralité d'appareils de détection, d'appareils d'actionnement, d'appareils de commutation, d'appareil d'amplification, d'appareils de commande, d'appareils d'interface ou d'appareil de couplage par bus.

5. Dispositif (100) selon la revendication 4,
dans lequel le dispositif de configuration (130) est en outre conçu pour déterminer la station d'E/S qui comprend au moins un appareil d'E/S ou un appareil de commutation ou un appareil d'amplification ou un appareil de commande ou un appareil d'interface ou un appareil de couplage par bus parmi la pluralité d'appareils d'E/S, d'appareils de commutation, d'appareils d'amplification, d'appareils de commande, d'appareils d'interface ou d'appareils de couplage par bus.

6. Dispositif (100) selon la revendication 5,
dans lequel le dispositif de configuration (130) est conçu pour déterminer la configuration de système pour la station d'E/S sur la base d'une comparaison des données sur des propriétés de scénarios de connexion sélectionnés par l'utilisateur pour une station d'E/S, avec les données sur des propriétés des appareils d'E/S.

7. Dispositif (100) selon l'une des revendications précédentes,
dans lequel le dispositif de sélection (110) est en outre conçu pour définir des données de réglage de base de la station d'E/S pour la configuration de système déterminée de la station d'E/S.

8. Dispositif (100) selon la revendication 7,
dans lequel un type de commande, une classe de performance ou un système de programmation sont définis en tant que données de réglage de base de la station d'E/S par le dispositif de sélection (110).

9. Dispositif (100) selon l'une des revendications précédentes,
dans lequel le dispositif de sélection (110) est en outre conçu pour définir des données sur des conditions-cadre de la station d'E/S pour la configuration de système déterminée de la station d'E/S.

10. Dispositif (100) selon la revendication 9,
dans lequel une plage de températures pour le fonctionnement de la station d'E/S, une plage de dimensions pour la construction de la station d'E/S, une plage d'humidité pour le fonctionnement de la station d'E/S, une plage de masses pour la construction de la station d'E/S, une plage de tensions ou une plage de courants pour la connexion de la station d'E/S, des autorisations requises pour la sélection des appareils sont définies en tant que données sur des conditions-cadre de la station d'E/S par le dispositif de sélection (110).

11. Procédé pour la conception itérative et interactive d'une station d'E/S pour une commande d'automatisation, le procédé comprenant les étapes de procédé suivantes consistant à :
- définir (S1) une sélection de signaux pour la station d'E/S sous la forme (i) de données de signaux et (ii) de données de planification pour la station d'E/S sur la base d'une entrée d'utilisateur au moyen d'un dispositif de sélection ;
- fournir (S2) des données sur des propriétés pour une pluralité d'appareils d'E/S au moyen d'un dispositif de base de données ;
- déterminer (S3) une configuration de système pour la station d'E/S sur la base des données de signaux, des données de planification et des données sur des propriétés au moyen d'un dispositif de configuration, dans lequel la configuration de système comprend au moins un appareil d'E/S parmi la pluralité d'appareils d'E/S, dans lequel un contrôle technique de règles de construction spécifiques de la station d'E/S respective de la configuration de système est en outre effectué par le dispositif de configuration et, en cas d'absence du contrôle technique, la configuration du système est changée ; et
- afficher (S4) la configuration de système pour la station d'E/S au moyen d'un dispositif d'affichage ;
dans lequel l'entrée d'utilisateur est guidée sous la forme d'une entrée de données interactive à partir du dispositif de sélection et dans lequel, pendant l'entrée d'utilisateur, une solution fonctionnelle pour la station d'E/S est déterminée par le dispositif de configuration ;
dans lequel les données sur des propriétés comprennent en outre au moins une fonction d'E/S d'un appareil d'E/S parmi la pluralité d'appareils d'E/S ; et/ou dans lequel les données de signaux comprennent en outre au moins une fonction d'E/S des signaux.

12. Procédé selon la revendication 11,
dans lequel des paramètres non spécifiés par l'entrée de données sont complétés et des valeurs par défaut leur sont attribuées par le dispositif de sélection, et tous les paramètres sont affichés par le dispositif d'affichage.

13. Procédé selon l'une des revendications 11 à 12 précédentes, dans lequel l'entrée d'utilisateur sous la forme de l'entrée de données interactive comporte une pluralité de modifications de données individuelles et, après chaque modification de données individuelle, une révision de la configuration de système pour la station d'E/S est effectuée par le dispositif de configuration.

14. Procédé selon l'une des revendications 11 à 13 précédentes, dans lequel les données sur des propriétés sont fournies par le dispositif de base de données pour une pluralité d'appareils de détection, d'appareils d'actionnement, d'appareils de commutation, d'appareil d'amplification, d'appareils de commande, d'appareils d'interface ou d'appareils de couplage par bus.
